(19) Europäisches Patentamt
European Patent Office
Office européen des brevets

(11) **EP 2 849 179 B1**

(12) **FASCICULE DE BREVET EUROPEEN**

(45) Date de publication et mention
de la délivrance du brevet:
**29.11.2017 Bulletin 2017/48**

(51) Int Cl.:
***G10L 19/018*** *(2013.01)*     ***H04B 11/00*** *(2006.01)*
***H04L 25/06*** *(2006.01)*

(21) Numéro de dépôt: **14183289.9**

(22) Date de dépôt: **02.09.2014**

(54) **Procédé de détection de symboles portés par au moins un signal émis en présence de bruit**

Verfahren zur Detektion von Symbolen, die mindestens von einem in Gegenwart von Lärm gesendeten Signal getragen werden

Method for detecting symbols carried by at least one signal transmitted in the presence of noise

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2013 FR 1358856**

(43) Date de publication de la demande:
**18.03.2015 Bulletin 2015/12**

(73) Titulaire: **Fidzup**
**92110 Clichy (FR)**

(72) Inventeur: **Noisel, Christophe**
**75010 Paris (FR)**

(74) Mandataire: **Petit, Maxime et al**
**Ipsilon**
**Le Centralis**
**63, avenue du Général Leclerc**
**92340 Bourg-la-Reine (FR)**

(56) Documents cités:
**US-A1- 2007 153 938     US-A1- 2011 029 370**
**US-A1- 2013 171 930**

EP 2 849 179 B1

**Description**

La présente invention concerne un procédé de détection de symboles portés par au moins un signal émis en présence de bruit.

L'invention concerne plus particulièrement, mais non exclusivement, l'application de ce procédé dans l'identification d'une information contenue dans un signal sonore dans lequel l'information est codée sous forme de symboles par exemple binaires.

L'invention trouve une application particulièrement avantageuse dans la localisation de terminaux de télécommunications tels que les téléphones mobiles.

En effet, on connaît des procédés dans lesquels un signal sonore inaudible à l'oreille humaine est diffusé dans un lieu tel qu'un magasin.

Le signal sonore diffusé comprend une ou plusieurs informations caractéristiques du magasin ou d'une zone du magasin dans lequel il est diffusé.

Lorsque le porteur d'un téléphone mobile pénètre dans le magasin, le téléphone reçoit le signal, l'enregistre, l'analyse et identifie l'information contenue dans le signal reçu par le téléphone mobile. Cette information est alors comparée à une information de référence propre au lieu de diffusion.

L'information de référence peut être stockée dans la mémoire du téléphone mobile ou sur un serveur informatique distant avec lequel le téléphone mobile peut communiquer par l'intermédiaire d'un réseau de télécommunications.

Si l'information reçue par le téléphone mobile correspond à une information de référence propre à un lieu de diffusion, le porteur du téléphone mobile peut alors voir s'afficher sur l'écran de son téléphone mobile des offres promotionnelles, des bons de réduction et/ou des informations relatives à des opérations commerciales ayant lieu à proximité.

Il est nécessaire que le procédé d'identification d'une information contenue dans un signal fonctionne avec le plus de types possibles de téléphones mobiles. En effet, les téléphones mobiles présentent des caractéristiques techniques et des performances très variées. Par exemple, les terminaux ont des microphones qui peuvent avoir des réponses fréquentielles très différentes. De plus, certains terminaux ou leurs systèmes d'exploitation n'échantillonnent pas le signal reçu aux mêmes fréquences. Dans ces conditions, lorsque l'analyse du signal met en oeuvre le calcul de son amplitude, ce calcul donne des résultats différents pour chaque type de portables pour des conditions d'enregistrement identiques. Concrètement, lorsque le rapport du signal sur le bruit ambiant est faible, certains terminaux peuvent être dans l'impossibilité d'effectuer une détection correcte du signal.

De plus, pendant la réception du signal par le téléphone mobile, le porteur du téléphone mobile peut être en mouvement ou les conditions de réception du signal peuvent être modifiées, par exemple par un changement de bruit ambiant, ce qui complique encore l'analyse du signal.

L'information contenue dans le signal est codée sous forme de symboles portés par ledit signal. Ces symboles sont par exemple des variations d'amplitudes du signal sur des durées de temps déterminées. C'est la détection de ces symboles qui permet de déterminer l'information contenue dans un signal.

Un procédé selon le préambule de la revendication 1 est connu du document US 2007/153938.

Ainsi, il existe donc un besoin pour un procédé de détection de symboles qui soit efficace quels que soient le microphone du récepteur, la fréquence d'échantillonnage du récepteur, le bruit ambiant...

La présente invention vise, entre autres, à remédier à au moins un des inconvénients précités en proposant un nouveau procédé de détection de symboles binaires $a_i$ portés par au moins un signal S émis en présence de bruit, comportant les étapes suivantes :

- réception et échantillonnage d'au moins un signal S bruité ;
- obtention d'au moins un signal S bruité formé d'une pluralité de portions du signal S échantillonné consécutives ayant chacune une durée $_D$ et un profil d'amplitude donné ;
- détermination, sur une durée $_D$, d'un profil moyen de l'amplitude A(t) d'une portion du signal S échantillonné, le profil moyen de l'amplitude A(t) étant établi à partir des profils d'amplitude de chacune des portions du signal S échantillonné ;
- détermination de la valeur maximale $A_{max}$ et de la valeur minimale $A_{min}$ de l'amplitude A(t) dudit profil moyen ;
- détection des symboles binaires $a_i$ portés par le signal S bruité, en fonction de la valeur maximale $A_{max}$, de la valeur minimale $A_{min}$ et d'un paramètre r prédéterminé dépendant du nombre de symboles $a_i$ portés par le signal S émis,

caractérisé en ce que l'étape de détection des symboles binaires $a_i$ portés par ledit au moins un signal S bruité est suivie par les étapes suivantes :

- détermination d'une information Id codée par les symboles binaires $a_i$,
- comparaison de l'information Id avec une information de référence Ir ;

et en ce que en ce que le paramètre r émis prend une valeur possible parmi un ensemble de valeurs $r_i$ prédéterminées, correspondant à une distribution prédéterminée d'un type de symbole sur le nombre total de symboles codant l'information Id.

Le procédé selon l'invention permet de détecter des symboles dans au moins un signal émis en présence de bruit environnant et ce, de manière simple et efficace malgré des conditions de réception du signal variables.

Le procédé selon l'invention prévoit de déterminer des valeurs $A_{max}$ et $A_{min}$ qui s'adaptent au contexte dans lequel le signal est émis et reçu. Le procédé prend ainsi en compte à travers ces valeurs les caractéristiques liées au matériel (à l'émission et à la réception) et à l'environnement. Ceci signifie qu'il n'est donc pas nécessaire d'effectuer un traitement des données propre à un récepteur (ex : terminal portable), à un lieu....dans la mesure où les valeurs précitées en sont représentatives. On notera que ces valeurs sont déterminées en permanence quel que soit le lieu et pour chaque contexte (bruit environnant) d'émission/réception.

L'étape de réception et d'échantillonnage du signal S bruité est par exemple effectuée par un téléphone mobile muni d'un microphone. On note que les caractéristiques des échantillons dudit au moins un signal S seront différentes d'un téléphone mobile à l'autre malgré des conditions de réception identiques.

Néanmoins, l'échantillonnage du signal S bruité est effectué de façon à satisfaire au critère de Shannon. L'étape de détermination, sur une durée $D$, d'un profil moyen de l'amplitude A(t) d'une portion du signal S échantillonné permet de définir le profil moyen d'un symbole ou un « symbole moyen ». Ce symbole $a_i$ moyen peut être comparé à un symbole de référence afin de détecter s'il y a effectivement un signal S émis dans le lieu où est situé le porteur du téléphone mobile. Plus particulièrement, l'étape de détermination d'un profil moyen d'amplitude d'une portion de signal S de durée $D$ peut s'effectuer par l'obtention d'une somme résultant de l'addition des portions d'une durée $D$ d'un ou de plusieurs signaux S reçus, puis par la division de la somme ainsi obtenue par le nombre de portions de signal S additionnées.

Chacune des portions du signal S reçu se présente sous la forme d'un ensemble d'échantillons du signal S, les additions s'effectuant terme à terme entre échantillons.

Le procédé selon l'invention s'applique à tout type de récepteur de signal (pas nécessairement un téléphone portable) doté d'une unité de calcul et d'un capteur de signal (par exemple un microphone pour un signal sonore) et, de façon optionnelle, d'une connexion Internet et d'un navigateur associé afin de pouvoir télécharger des données, notamment un contenu de message et/ou une application utilisée pour la mise en oeuvre du procédé. Le récepteur est par exemple une tablette ipad (marque déposée), un ordinateur.....

Selon une caractéristique possible, le procédé comporte, préalablement à l'étape de détection, un étape de détermination d'une valeur seuil $A_{seuil}$ de l'amplitude en fonction de la valeur maximale $A_{max}$, de la valeur minimale Amin et du paramètre r prédéterminé, l'étape de détection étant effectuée à partir de la valeur seuil $A_{seuil}$.

L'utilisation d'une valeur seuil $A_{seuil}$ qui dépend de la valeur maximale $A_{max}$, de la valeur minimale $A_{min}$ et d'un paramètre r prédéterminé du signal S émis permet de limiter les erreurs de détection des symboles $a_i$ dans un environnement bruité.

Selon une autre caractéristique possible, chacun des symboles $a_i$ présente une durée $D$.

Selon une autre caractéristique possible, le procédé comporte préalablement à la détermination dudit profil moyen de l'amplitude A(t), une étape d'analyse fréquentielle desdits échantillons dudit au moins un signal S bruité.

L'étape d'analyse fréquentielle permet de travailler dans le domaine des fréquences et ainsi de simplifier les opérations effectuées lors des étapes postérieures. En effet, cela permet de filtrer une partie du bruit lors de la réception du signal en sélectionnant un domaine de fréquences par exemple centré sur la fréquence du signal émis.

Selon une autre caractéristique possible, l'étape d'analyse fréquentielle s'effectue au moyen d'un algorithme de Goertzel ou d'une transformée de Fourier.

L'algorithme de Goertzel ou la transformation de Fourier est appliquée avec une fonction de fenêtrage, par exemple une fenêtre de Hamming, sur des portions du signal S échantillonné. Plus particulièrement, la fonction de fenêtrage s'applique par exemple sur des portions successives du signal S échantillonné se chevauchant.

Selon une autre caractéristique possible, le signal S émis est de durée T, le procédé comportant une étape de moyennage du signal S bruité à partir d'une pluralité de signaux bruités chacun d'une durée T.

L'étape de moyennage permet d'obtenir une somme résultant de l'addition de signaux S échantillonnés d'une durée T, puis de diviser cette somme par le nombre de signaux S échantillonnés d'une durée T additionnés.

On notera que l'étape de moyennage peut être effectuée dans le domaine fréquentiel.

L'étape de moyennage permet de limiter les erreurs sur les symboles $a_i$ portés par le signal S. Les erreurs sur les symboles résultent par exemple d'interférences destructives entre signaux S émis ou des perturbations subies par le signal S lors de sa propagation dans un environnement bruité.

En procédant aux étapes de :

- détermination d'une information Id codée par les symboles $a_i$,
- comparaison de l'information Id avec une information de référence Ir.

il est ainsi possible de récupérer un contenu potentiellement important (en taille) de message porté par ledit au moins un signal à partir d'une information Id de faible longueur.

Selon une autre caractéristique possible, le signal est un signal sonore. L'application du procédé au secteur de la téléphonie présente l'avantage d'être compatible sur un maximum de terminaux.

Selon une autre caractéristique possible, la fréquence dudit signal S sonore est comprise dans une bande de fréquences entre 18 et 24 kHz. L'utilisation d'une telle gamme de fréquences permet de travailler dans ls limites techniques d'émission/réception conventionnelles, tout en étant très peu perceptible pour l'oreille humaine.

Selon une autre caractéristique possible, le signal S émis comporte au moins l'un des éléments suivants :

- une séquence d'initialisation,
- un champ d'en-tête,
- un code de redondance cyclique (ou CRC),
- un code correcteur,
- une signature d'authenticité.

Selon un autre aspect, l'invention concerne aussi un récepteur (tel qu'un terminal mobile) comprenant des moyens pour la mise en oeuvre du procédé selon l'invention.

Selon un autre aspect, l'invention concerne un programme d'ordinateur à installer dans un récepteur selon l'invention, comprenant des instructions aptes à mettre en oeuvre le procédé selon l'invention, lors de l'exécution du programme par les moyens de mise en oeuvre du procédé.

L'invention sera mieux comprise, et d'autres buts, détails, caractéristiques et avantages de celles-ci apparaîtront plus clairement au cours de la description suivante d'un mode de réalisation particulier de l'invention, donnée uniquement à titre illustratif et non limitatif, en référence aux dessins annexés, sur lesquels :

- la figure 1 représente une vue schématique des éléments d'un système mettant en oeuvre le procédé selon un mode de réalisation de l'invention ;
- la figure 2 représente un logigramme des étapes du procédé selon un mode de réalisation de l'invention,
- les figures 3a à 3e représentent un exemple de signal obtenu suite à l'une des étapes du procédé selon l'invention effectué par un premier type de téléphone mobile ;
- Les figures 4a à 4e représentent un exemple de signal obtenu suite à l'une des étapes du procédé selon l'invention effectué par un deuxième type de téléphone mobile.

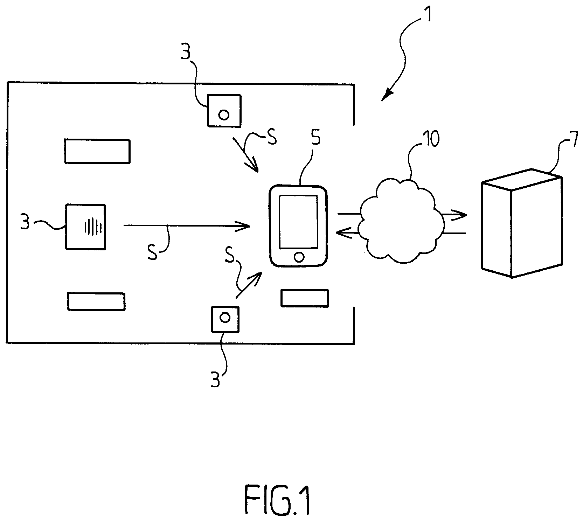

En référence à la figure 1, on a représenté de manière schématique les éléments d'un système 1 mettant en oeuvre le procédé selon un mode de réalisation de l'invention.

Le système 1 comprend :

- un ou plusieurs émetteurs 3 aptes à émettre un signal sonore S tels que des haut-parleurs, une télévision, une radio...
- un terminal de télécommunications 5 tel qu'un téléphone mobile (récepteur de signal au sens de l'invention),

- un serveur informatique 7 auquel le téléphone mobile 5 est apte à se connecter en vue d'échanger des données informatiques par l'intermédiaire d'un réseau de télécommunications 10.

Le signal sonore S émis par les émetteurs 3 est situé dans une plage de fréquences telle que le signal S est inaudible pour des êtres humains. La fréquence du signal sonore est plus particulièrement comprise dans une bande de fréquence allant de 18 à 24 kHz. Le signal sonore S peut donc être incorporé à une diffusion sonore audible par un être humain telle qu'un morceau de musique, une publicité... sans en modifier la qualité sonore.

Plus particulièrement, le signal sonore S est porteur d'une information Id codée sous forme de symboles $a_i$ qui sont ici binaires.

Dans le mode de réalisation présenté, les symboles $a_i$ sont caractérisés par leur durée $_D$ et leur amplitude A(t) sur la durée $_D$. Un symbole $a_i$ correspond soit à un bit à '1' qui comporte une partie d'amplitude nulle et une brusque variation de l'amplitude (c'est-à-dire à une impulsion), soit à un bit à '0' et se présente sous la forme d'une amplitude nulle.

Ainsi, le signal est formé par une suite finie et prédéterminée de bits à '1' est à '0' ayant chacun une durée $_D$. Le signal S est de plus formé de N bits (ou symboles $a_i$) ayant une durée totale T (ainsi T = N$_D$). Par exemple, la durée $_D$ de chaque symbole $a_i$ est comprise entre 30 et 60 millisecondes et la durée d'un signal S est d'environ 2 secondes (donc le nombre de symboles est compris environ entre 32 et 64).

En outre, le signal S, codé de manière binaire, comprend au moins l'un des éléments suivants :

- une séquence d'initialisation,
- un champ d'en-tête,
- un code de redondance cyclique (ou CRC),
- un code correcteur,
- une signature d'authenticité,

et de préférence comprend tous ces éléments.

En outre, le signal S présente un paramètre r prédéterminé qui est une grandeur physique caractéristique de ce signal S et qui dépend de la puissance du signal S émis par rapport à sa puissance maximale possible. Dans le mode de réalisation présenté, le paramètre r correspond au rapport entre le nombre de bits à '1' sur le nombre total de bits N du signal S.

Par ailleurs, le téléphone mobile 5 comprend un moyen de réception d'un signal sonore S tel qu'un microphone et des moyens aptes à traiter ce signal (ex : un microprocesseur, mémoire, etc.).

Le téléphone mobile 5 comprend en outre un programme d'ordinateur apte à exécuter les étapes décrites ci-dessous du procédé selon un mode de réalisation de l'invention. Ce programme peut être préalablement stocké dans une mémoire du téléphone ou téléchargé lorsque cela est nécessaire avant la mise en oeuvre du procédé.

Le signal sonore S est émis de manière répétée par l'intermédiaire des émetteurs 3 dans un environnement bruité tel que, par exemple, un magasin, un centre commercial, une gare, une bibliothèque. Le signal sonore reçu par le microphone du téléphone mobile est donc un signal sonore S émis auquel se superpose le bruit de l'environnement dans lequel le signal S est diffusé.

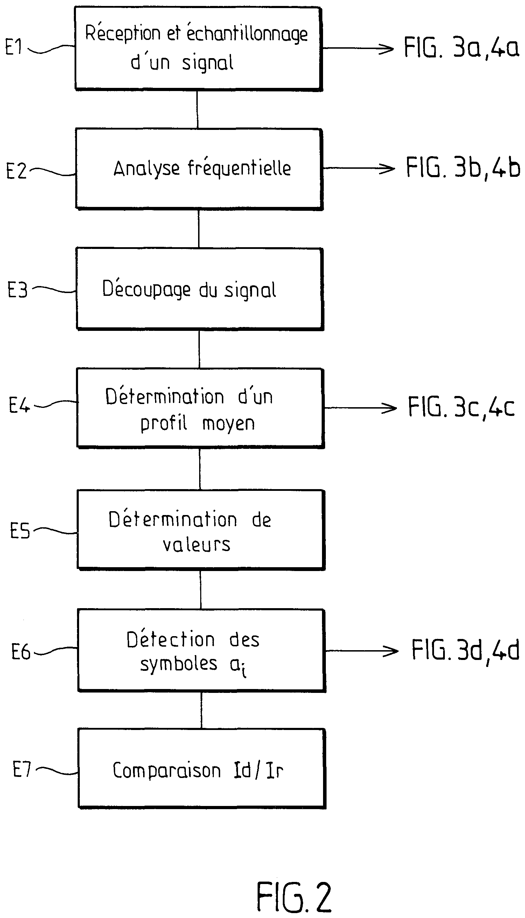

La figure 2 représente sous forme de logigramme, des étapes de mise en oeuvre du procédé de détection de symboles.

Ainsi, le téléphone mobile 5 effectue une première étape E1 de réception et d'échantillonnage d'un ou de plusieurs signaux sonores S bruités par l'intermédiaire des moyens de traitement de signal. L'échantillonnage du signal S bruité est effectué de façon à satisfaire au critère de Shannon (c'est-à-dire à une fréquence d'échantillonnage supérieure à la fréquence de Nyquist).

Chaque signal S bruité échantillonné est stocké dans une mémoire du téléphone mobile 5.

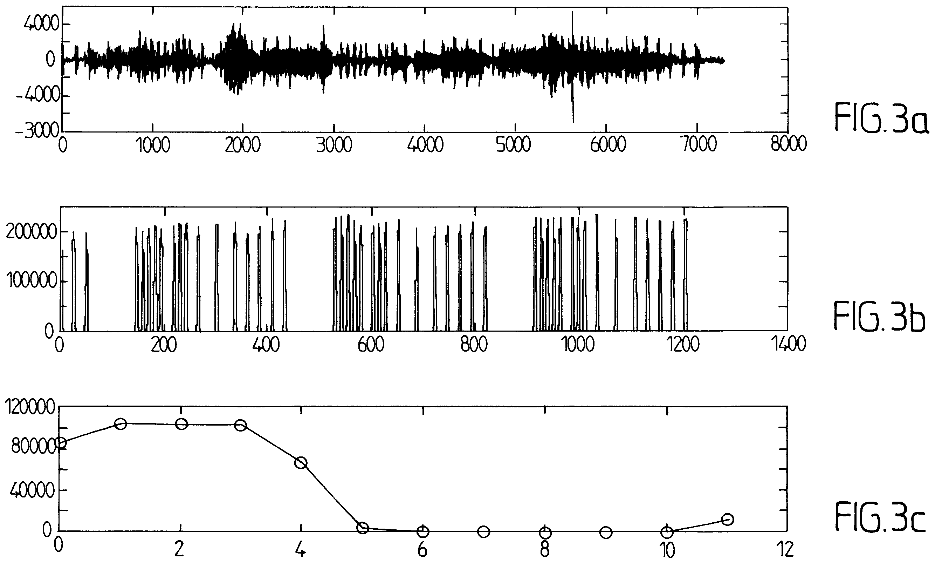

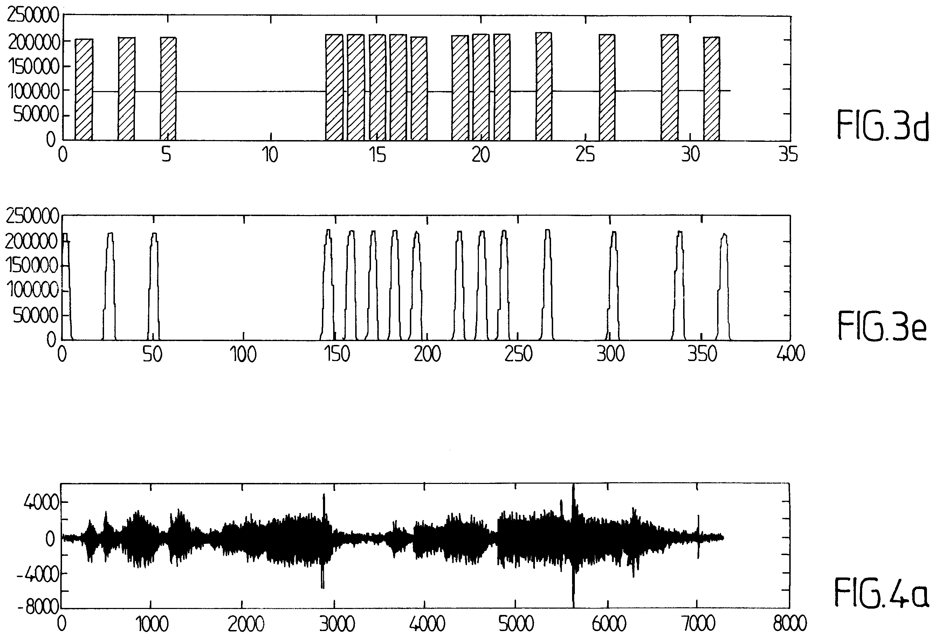

Les figures 3a et 4a sont des exemples de deux signaux S reçus et échantillonnés par deux types différents de téléphones mobiles, respectivement un téléphone de type iPhone (marque déposée) et de type Android. Pour les besoins de la comparaison entre les figures le signal de la figure 4a a été volontairement amplifié.

On notera que les exemples illustrés par les figures 3a-e et 4a-e présentent, d'une part, une échelle des abscisses qui est proportionnelle à une durée (domaine temporel) ou à l'inverse d'une durée (domaine fréquentiel) et, d'autre part, une échelle des ordonnées qui est proportionnelle à l'amplitude du signal reçu par le récepteur (c'est-à-dire proportionnel à l'énergie du signal).

Le téléphone mobile 5 effectue ensuite une étape E2 d'analyse fréquentielle sur les fréquences d'intérêt du ou des signaux S échantillonnés.

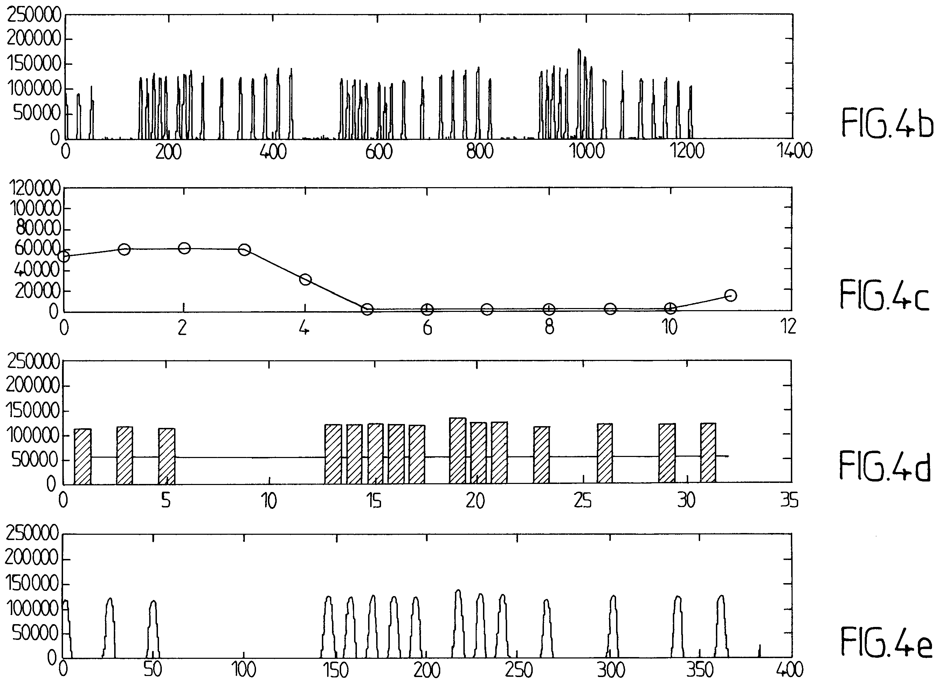

Les figures 3b et 4b sont des exemples de deux signaux S sur lesquels a été effectuée une analyse fréquentielle par les deux mêmes types différents de téléphones mobiles.

L'analyse fréquentielle s'effectue plus particulièrement au moyen d'un algorithme de Goertzel sur des ensembles d'échantillons correspondant à une durée inférieure à $_D$.

De plus, l'algorithme de Goertzel est appliqué à des ensembles successifs d'échantillons qui se chevauchent ou se recoupent. Autrement dit, deux ensembles d'échantillons successifs présentent des échantillons communs. Cela permet de moyenner les valeurs des échantillons et ainsi de réduire le rapport signal sur bruit du ou des signaux S échantillonnés.

On notera que l'étape E2 d'analyse fréquentielle peut aussi être effectuée au moyen d'une transformée de Fourier.

A la suite de l'étape d'analyse fréquentielle, le téléphone mobile 5 effectue les étapes postérieures dans le domaine fréquentiel. Ainsi, l'étape suivante E3 prévoit de découper le ou les signaux S échantillonnés en portions de signal consécutives de durée $_D$. Les portions de signal S sont additionnées, terme à terme, les unes aux autres. Cette somme de portions de signal S est ensuite moyennée par le nombre de portions de signal S de durée $_D$ (c'est-à-dire qu'on divise la somme des portions de signal S par le nombre de portions de signal S additionnées entre elles). On effectue alors une transformée de Fourier ou un algorithme de Goertzel sur cette somme moyennée de portions de signal S de durée $_D$. On détermine ainsi un profil moyen E4 d'un symbole correspondant à un bit à '1'.

Les figures 3c et 4c sont des exemples de profil moyen d'un symbole correspondant à un bit '1' obtenu par les deux mêmes types différents de téléphones mobiles.

Le téléphone mobile 5 effectue ensuite une étape E5 de détermination, à partir dudit profil moyen de la phase ou offset (c'est-à-dire la position temporelle de l'amplitude maximale), de la valeur de l'amplitude maximale $A_{max}$ et de la valeur de l'amplitude minimale $A_{min}$.

On note que l'amplitude minimale $A_{min}$ correspond sensiblement à la valeur moyenne du bruit lors de la réception du signal S par le téléphone mobile 5. On note de plus que l'amplitude maximale $A_{max}$ correspondant à une grandeur moyenne caractéristique du symbole '1' dépend entre autres du téléphone mobile recevant le signal. Le procédé de détection selon l'invention permet donc de s'affranchir des caractéristiques techniques propres au téléphone mobile recevant le signal puisque la valeur $A_{max}$ les prend en compte.

On note que la détermination de l'offset permet de déterminer les points d'intérêt du signal S reçu et d'affiner les données traitées.

Le téléphone mobile 5 effectue ensuite une étape E5 de détermination ou de calcul d'une valeur seuil $A_{seuil}$ qui est fonction de la valeur maximale $A_{max}$, de la valeur minimale $A_{min}$ et du paramètre r.

Plus particulièrement, la valeur seuil peut prendre la forme suivante :

$$A_{seuil} = \frac{A_{max} - (1+r)A_{min}}{2r}$$

Cette valeur seuil $A_{seuil}$ est ensuite utilisée dans une étape E6 de détection des symboles $a_i$ portés par chacune des portions du signal S de durée $_D$. Si une portion de signal S présente une amplitude supérieure à $A_{seuil}$, alors cette portion de signal S est détectée comme un symbole correspondant à un bit à '1'. Inversement, si une portion de signal S présente une amplitude inférieure à $A_{seuil}$, alors cette portion de signal S est détectée comme un symbole correspondant à un bit à '0'. L'étape de détection des symboles est par exemple appliquée sur les signaux précédemment reçus et échantillonnés qui sont stockés dans une mémoire du téléphone mobile 5.

Les figures 3d et 4d sont des exemples de dé-

tection des symboles $a_i$ portés par un signal S par les deux mêmes types différents de téléphones mobiles.

La détection des symboles $a_i$ portés par le signal S permet d'obtenir une information Id (qui est ici codée sous forme de bits) qui est comparée à une information de référence Ir lors d'une étape E7 de comparaison.

L'information de référence Ir peut être stockée dans une mémoire du téléphone mobile ou sur le serveur distant 7 avec lequel le téléphone mobile peut échanger des données.

On note que l'information de référence Ir est caractéristique d'un lieu.

Ainsi, si l'information Id codée par les symboles binaires détectés correspond à une information de référence Ir, le lieu où est localisé le porteur du téléphone mobile est identifié. On peut, par exemple, faire parvenir par l'intermédiaire du téléphone mobile des messages, informations, publicités en rapport avec le lieu où il se situe.

Dans une variante de réalisation non représentée, le paramètre r du signal S émis peut prendre une valeur possible parmi un ensemble de valeurs $r_i$ prédéterminées.

En effet, le rapport entre le nombre de bits à '1' sur le nombre total de bits N du signal S peut être une distribution discrète de valeurs. La distribution des valeurs de l'ensemble des valeurs $r_i$ peut par exemple être prédéterminée par l'utilisation d'un code de redondance cyclique. Ainsi, certaines valeurs $r_i$ seront plus probables que d'autres.

L'étape de calcul de la valeur seuil $A_{seuil}$, ainsi que les étapes de détection des symboles $a_i$ et de comparaison de l'information Id sont alors répétées en commençant par la valeur la plus probable de l'ensemble $r_i$ jusqu'à la valeur la moins probable de l'ensemble $r_i$ et ce, jusqu'à ce qu'une information Id corresponde à une information de référence Ir.

Cette variante de réalisation est par exemple appliquée de manière discontinue mais à des intervalles de temps réguliers afin d'augmenter les probabilités de détection d'une information Id dans un signal S reçu par le téléphone mobile 5.

Dans une autre variante de réalisation non représentée, le téléphone mobile 5 effectue une étape de moyennage du signal S bruité à partir d'une pluralité de signaux S bruités d'une durée T. Le téléphone mobile 5 effectue ainsi une somme, terme à terme, de plusieurs signaux S échantillonnés chacun ayant une durée T. Cette somme est ensuite divisée par le nombre de signaux S échantillonnés de durée T. Cela permet d'obtenir un signal S moyen présentant un meilleur rapport signal sur bruit et moins d'erreurs (telles que l'absence de symboles) que des procédés de l'état de la technique antérieure.

Les opérations effectuées dans les variantes de réalisation peuvent être effectuées dans le domaine temporel ou fréquentiel.

Les figures 3e et 4e sont des exemples de ce qui est obtenu, dans le domaine des fréquences, suite à l'étape de moyennage du signal S bruité par les deux mêmes types différents de téléphones mobiles.

**Revendications**

1. Procédé de détection de symboles binaires $a_i$ portés par au moins un signal S émis en présence de bruit, le procédé comportant les étapes suivantes :

   - réception et échantillonnage (E1) d'au moins un signal S bruité ;
   - obtention (E3) d'au moins un signal S bruité formé d'une pluralité de portions du signal S échantillonné consécutives ayant chacune une durée $_D$ et un profil d'amplitude donné ;
   - détermination (E4), sur une durée $_D$, d'un profil moyen de l'amplitude A(t) d'une portion du signal S échantillonné, le profil moyen de l'amplitude A(t) étant établi à partir des profils d'amplitude de chacune des portions du signal S échantillonné ;
   - détermination (E5) de la valeur maximale $A_{max}$ et de la valeur minimale $A_{min}$ de l'amplitude A(t) dudit profil moyen ;
   - détection (E6) des symboles binaires $a_i$ portés par le signal S bruité, en fonction de la valeur maximale $A_{max}$, de la valeur minimale $A_{min}$ et d'un paramètre r prédéterminé dépendant du nombre de symboles binaires $a_i$ portés par le signal S émis,

   **caractérisé en ce que** l'étape de détection des symboles binaires $a_i$ portés par ledit au moins un signal S bruité est suivie par les étapes suivantes :

   - détermination d'une information Id codée par les symboles binaires $a_i$,
   - comparaison (E7) de l'information Id avec une information de référence Ir ;

   et **en ce que en ce que** le paramètre r émis prend une valeur possible parmi un ensemble de valeurs $r_i$ prédéterminées, correspondant à une distribution prédéterminée d'un type de symbole sur le nombre total de symboles codant l'information Id.

2. Procédé selon la revendication 1, **caractérisé en ce qu'**il comporte, préalablement à l'étape de détection, un étape de détermination (E5) d'une valeur seuil $A_{seuil}$ de l'amplitude en fonction de la valeur maximale $A_{max}$, de la valeur minimale $A_{min}$ et du paramètre r prédéterminé, l'étape de détection étant effectuée à partir de la valeur seuil $A_{seuil}$.

3. Procédé selon la revendication 1 ou 2, **caractérisé**

**en ce que** chacun des symboles a$_i$ présente une durée $_D$.

4. Procédé selon l'une quelconque des revendications 1 à 3, caractérisé en qu'il comporte préalablement à la détermination dudit profil moyen de l'amplitude A(t), une étape d'analyse fréquentielle (E2) desdits échantillons dudit au moins un signal S bruité.

5. Procédé selon la revendication 4, caractérisé en que l'étape d'analyse fréquentielle s'effectue au moyen d'un algorithme de Goertzel ou d'une transformée de Fourier.

6. Procédé selon l'une quelconque des revendications précédentes, **caractérisé en ce que** le signal S émis est de durée T, le procédé comportant une étape de moyennage du signal S bruité à partir d'une pluralité de signaux bruités chacun d'une durée T.

7. Procédé selon l'une quelconque des revendications précédentes, **caractérisé en ce que** le signal S est un signal sonore.

8. Procédé selon la revendication 7, **caractérisé en ce que** la fréquence dudit signal S sonore est comprise dans une bande de fréquences entre 18 et 24 kHz.

9. Procédé selon l'une quelconque des revendications précédentes, **caractérisé en ce que** le signal S comporte au moins l'un des éléments suivants :

- une séquence d'initialisation,
- un champ d'en-tête,
- un code de redondance cyclique (ou CRC),
- un code correcteur,
- une signature d'authenticité.

10. Récepteur comprenant des moyens pour la mise en oeuvre du procédé selon l'une quelconque des revendications précédentes.

11. Programme d'ordinateur à installer dans un récepteur selon la revendication 10, comprenant des instructions aptes à mettre en oeuvre le procédé selon l'une quelconque des revendications 1 à 9, lors de l'exécution du programme par les moyens de mise en oeuvre du procédé.

**Patentansprüche**

1. Verfahren zur Ermittlung von binären Symbolen a$_i$, die von mindestens einem in Gegenwart von Lärm gesendeten Signal S getragen werden, wobei das Verfahren die folgenden Schritte aufweist:

- Empfangen und Sampeln (E1) mindestens eines Rauschsignals S,
- Erhalten (E3) mindestens eines Rauschsignals S, gebildet von einer Vielzahl von aufeinanderfolgenden Abschnitten des gesampelten Signals S mit jeweils einer Dauer $_D$ und einem bestimmten Amplitudenprofil,
- Bestimmen (E4), über eine Dauer $_D$, eines mittleren Profils der Amplitude A(t) eines Abschnitts des gesampelten Signals S, wobei das mittlere Profil der Amplitude A(t) auf der Basis der Amplitudenprofile jedes der Abschnitte des gesampelten Signals S ermittelt wird,
- Bestimmen (E5) des maximalen Wertes A$_{max}$ und des minimalen Wertes A$_{min}$ der Amplitude A(t) des mittleren Profils,
- Ermitteln (E6) der binären Symbole a$_i$, die von dem Rauschsignal S getragen werden, in Abhängigkeit vom maximalen Wert A$_{max}$, vom minimalen Wert A$_{min}$ und einem vorbestimmten Parameter r in Abhängigkeit von der Anzahl binärer Symbole a$_i$, die von dem gesendeten Signal S getragen werden,

**dadurch gekennzeichnet, dass** dem Schritt des Ermittelns der binären Symbole a$_i$, die von dem mindestens einen Rauschsignal S getragen werden, die folgenden Schritte folgen:

- Bestimmen einer von den binären Symbolen a$_i$ codierten Information Id,
- Vergleichen (E7) der Information Id mit einer Referenzinformation Ir,

und dadurch, dass der gesendete Parameter r einen möglichen Wert aus einer Gruppe vorbestimmter Werte r$_i$ entsprechend einer vorbestimmten Verteilung eines Symboltyps aus der Gesamtanzahl von Symbolen, die die Information Id codieren, annimmt.

2. Verfahren nach Anspruch 1, **dadurch gekennzeichnet, dass** es vor dem Erkennungsschritt einen Bestimmungsschritt (E5) eines Grenzwertes A$_{Grenzwert}$ der Amplitude in Abhängigkeit vom maximalen Wert A$_{max}$, vom minimalen Wert A$_{min}$ und des vorbestimmten Parameters aufweist, wobei der Erkennungsschritt auf der Basis des Grenzwertes A$_{Grenzwert}$ durchgeführt wird.

3. Verfahren nach Anspruch 1 oder 2, **dadurch gekennzeichnet, dass** jedes der Symbole a$_i$ eine Dauer $_D$ aufweist.

4. Verfahren nach einem der Ansprüche 1 bis 3, **dadurch gekennzeichnet, dass** es vor der Bestimmung des mittleren Profils der Amplitude A(t) einen Frequenzanalyseschritt (E2) der Samples des mindestens einen Rauschsignals S aufweist.

**5.** Verfahren nach Anspruch 4, **dadurch gekennzeichnet, dass** der Frequenzanalyseschritt mittels eines Goertzel-Algorithmus oder einer Fourier-Transformation erfolgt.

**6.** Verfahren nach einem der vorangehenden Ansprüche, **dadurch gekennzeichnet, dass** das gesendete Signal S die Dauer T hat, wobei das Verfahren einen mittelnden Schritt des Rauschsignals S auf der Basis einer Vielzahl von Rauschsignalen jeweils einer Dauer T aufweist.

**7.** Verfahren nach einem der vorangehenden Ansprüche, **dadurch gekennzeichnet, dass** das Signal S ein Tonsignal ist.

**8.** Verfahren nach Anspruch 7, **dadurch gekennzeichnet, dass** die Frequenz des Tonsignals S in einem Frequenzband zwischen 18 und 24 kHz liegt.

**9.** Verfahren nach einem der vorangehenden Ansprüche, **dadurch gekennzeichnet, dass** das Signal S mindestens eines der folgenden Elemente aufweist:

- eine Initialisierungssequenz,
- ein Kopffeld,
- einen zyklischen Redundanzcode (oder CRC),
- einen Korrekturcode,
- eine Authentizitätssignatur.

**10.** Empfänger, umfassend Mittel für die Umsetzung des Verfahrens nach einem der vorangehenden Ansprüche.

**11.** Rechnerprogramm zum Installieren in einem Empfänger nach Anspruch 10, umfassend Befehle, die imstande sind, das Verfahren nach einem der Ansprüche 1 bis 9 bei der Ausführung des Programms durch Umsetzungsmittel des Verfahrens umzusetzen.

**Claims**

**1.** A method for detecting binary symbols $a_i$ carried by at least one signal S emitted in the presence of noise, the method including the following steps:

- receiving and sampling (E1) at least one noisy signal S;
- obtaining (E3) at least one noisy signal S made up of a plurality of consecutive portions of the sampled signal S each having a duration $_D$ and a given amplitude profile;
- determining (E4), over a duration $_D$, a mean profile of the amplitude A(t) of a portion of the sampled signal S, the mean profile of the amplitude A(t) being established from amplitude profiles of each of the portions of the sampled signal S;
- determining (E5) the maximum value $A_{max}$ and the minimum value $A_{min}$ of the amplitude A(t) of said mean profile;
- detecting (E6) binary symbols $a_i$ carried by the noisy signal S, as a function of the maximum value $A_{max}$, the minimum value $A_{min}$ and a predetermined parameter r depending on the number of binary symbols $a_i$ carried by the emitted signal S,

**characterized in that** the step for detecting the binary symbols $a_i$ carried by said at least one noisy signal S is followed by the following steps:

- determining an item of information Id encoded by the binary symbols $a_i$,
- comparing (E7) the information Id with reference information Ir;

and **in that** the emitted parameter r assumes one possible value from among a set of predetermined values n, corresponding to a predetermined distribution of one type of symbol out of the total number of symbols encoding the information Id.

**2.** The method according to claim 1, **characterized in that** it includes, prior to the detection step, a step for determining (E5) a threshold value $A_{seuil}$ of the amplitude as a function of the maximum value $A_{max}$, the minimum value $A_{min}$ and the predetermined parameter r, the detection step being carried out from the threshold value $A_{seuil}$.

**3.** The method according to claim 1 or 2, **characterized in that** each of the symbols $a_i$ has a duration $_D$.

**4.** The method according to any one of claims 1 to 3, **characterized in that** it includes, before determining said mean profile of the amplitude A(t), a frequency analysis step (E2) for said samples of said at least one noisy signal S.

**5.** The method according to claim 4, **characterized in that** the frequency analysis step is carried out using a Goertzel algorithm or a Fourier transform.

**6.** The method according to any one of the preceding claims, **characterized in that** the emitted signal S has a duration T, the method including a step for averaging the noisy signal S from a plurality of noisy signals S each with a duration T.

**7.** The method according to any one of the preceding claims, **characterized in that** the signal S is an aural signal.

8. The method according to claim 7, **characterized in that** the frequency of said aural signal S is comprised in a frequency band between 18 and 24 kHz.

9. The method according to any one of the preceding claims, **characterized in that** the signal S includes at least one of the following elements:

> - an initialization sequence,
> - a header field,
> - a cyclic redundancy code (or CRC),
> - a corrector code,
> - and authenticity signature.

10. A receiver comprising means for carrying out the method according to any one of the preceding claims.

11. A computer program to be installed in a receiver according to claim 10, comprising instructions able to carry out the method according to any one of claims 1 to 9, during the execution of the program by the means for implementing the method.

FIG.1

E1 — Réception et échantillonnage d'un signal → FIG. 3a,4a

E2 — Analyse fréquentielle → FIG. 3b,4b

E3 — Découpage du signal

E4 — Détermination d'un profil moyen → FIG. 3c,4c

E5 — Détermination de valeurs

E6 — Détection des symboles $a_i$ → FIG. 3d,4d

E7 — Comparaison Id / Ir

FIG. 2

FIG.3a

FIG.3b

FIG.3c

EP 2 849 179 B1

FIG.3d

FIG.3e

FIG.4a

EP 2 849 179 B1

FIG.4b

FIG.4c

FIG.4d

FIG.4e

EP 2 849 179 B1

## RÉFÉRENCES CITÉES DANS LA DESCRIPTION

**Documents brevets cités dans la description**

- US 2007153938 A